# EUROPEAN PATENT SPECIFICATION

(11) **EP 1 539 460 B1**
(45) Date of publication and mention of the grant of the patent: **23.05.2007**
(21) Application number: 02768646.8
(22) Date of filing: 22.08.2002
(51) Int. Cl.: B29C 51/22, B65D 81/03, B32B 3/00, B32B 37/00

(54) **PROCESS FOR MAKING LAMINATED FILM ARTICLE HAVING INFLATABLE CHAMBERS**
VERFAHREN ZUR HERSTELLUNG EINES MEHRSCHICHTFOLIENARTIKELS MIT AUFBLASBAREN KAMMERN
PROCEDE DE FABRICATION D'ARTICLE DE FILM STRATIFIE COMPORTANT DES CHAMBRES GONFLABLES

(43) Date of publication of application: 15.06.2005
(73) Proprietor: Sealed Air Corporation (US), Saddle Brook, New Jersey 07663 (US)
(72) Inventor: KANNANKERIL, Charles, North Caldwell, NJ 07006 (US); METTA, Mike, c/o Sealed Air Corporation, Saddlebrook, NJ 17663 (US); O'DOWD, Bob, Wesley Hills, NY 10901 (US)
(74) Representative: Price, Nigel John King
(86) International application number: PCT/US2002/026644
(87) International publication number: WO 2004/030896

(56) References cited:
- EP-A- 0 415 730
- EP-A- 0 701 954
- WO-A-89/00919
- GB-A- 978 654
- US-A- 3 346 438
- US-A- 3 954 368
- US-A- 4 169 002
- US-A- 5 116 444
- US-A- 5 196 254
- US-A- 5 665 456
- US-B1- 6 410 119

## Description

### FIELD OF THE INVENTION

The present invention relates generally to methods of making laminated film articles, apparatus for making laminated film articles, and more particularly, to apparatus and methods for making laminated film articles having inflatable chambers and channels.

### BACKGROUND OF THE INVENTION

Conventional cushion materials include thermoformed sealed laminate articles such as Bubble Wrap^{®} cushioning material (see WO 89/00919 and EP-A-0,701,954). However, it is also known to prepare laminated inflatable articles which can be shipped to a packer uninflated, and inflated immediately before use. Such inflatable articles are typically made from two heat sealable films which are fused together in discrete areas to form one or more inflatable chambers.

Conventional methods of making cushion material, such as Bubble Wrap^{®} cushioning material, use a vacuum source to deform polymer film to form bubbles or pockets that can be filled with air (or other gases) to form bubbles. Such products can be made using a heated drum having recesses that are connected to a vacuum source. When vacuum is applied, each of various regions of the heated film in contact with the drum is drawn into a recess on the drum. The heated film is deformed and thinned in the regions drawn into the recess by the vacuum process. One side of the resulting film remains "flat", while the other side is not flat, but rather is "thermoformed". A second film which preferably is a flat film, i.e., not thermoformed, is fused to the "flat side" of the formed film, resulting in a plurality of sealed, air-filled "bubbles." (see US 3, 346, 438).

### SUMMARY OF INVENTION

The present invention provides a process for making an inflatable laminated article, comprising the steps of: (A) containing a first film with a second film; (B) heating selected portions of at least one the first and second films to a temperature above a fusion temperature of the first and second films, so that the first and second films are heat sealed to one another to produce a laminated article having heat seal pattern which provides a plurality of inflatable chambers between the first film and the second film; wherein the first and second films are forwarded at a speed of at least 35 m per minute (120 feet per minute) while coming into contact with one another, and wherein the heating is carried out by contacting the first film with a heated raised surface roller having a release coating thereon.

The preferred embodiment provides a method of making an inflatable article at relatively high speed, by bringing a first film into contact with a second film and heating selected portions of at least one the first and second films to a temperature above a fusion temperature of the first and second films, so that the first and second films are heat sealed to one another to produce a laminated article. The sealing forms a heat seal pattern which provides a plurality of inflatable chambers between the first film and the second film. The first and second films are forwarded at a speed of at least 120 feet per minute while coming into contact with one another. The heating is carried out by contacting the first film with a heated raised surface roller having a release coating thereon. At least the seal layers of one or both of the films are heated to a temperature at or above a temperature at which the one or more of the seal layers will fuse. Preferably, the raised surface roller rotates at a speed which matches the speed at which the first and second films are being forwarded. Preferably, the raised surface roller has a surface roughness of from 50 to 500 rms. Preferably, the first and second films are heat sealed to one another under a combination of heat and pressure.

Preferably, the pressure is produced by means for forming a nip area. The means for forming a nip area includes not only nip rolls, but also gas and fluid impingement, film tensioning against the raised surface roller, and electrostatic nip, as disclosed in U.S. Patent No. 5,116,444, to John G. Fox. Preferably, the means for forming a nip area is a contact roller in a nip relationship with the raised surface roller.

Preferably, the first film is brought into contact with the raised surface roller and heated to the fusion temperature before passing through the nip area. Preferably, the release coating on the raised surface roller comprises a polymer. Preferably, the release coating is a polyinfused coating. Preferably, the poly infused coating comprises polytetrafluoroethylene. Preferably, the edges of the raised surface of the raised surface roller have a radius of curvature of from 0.1mm to 10mm (1/256 inch to 3/8 inch).

Preferably, the process further comprises cooling the first and second films after heating the selected portions of the films, the cooling being carried out by a means for cooling. The means for cooling can be, for example, ambient air impingement, refrigerated air impingement, forwarding the film through ambient for a time period long enough to effect cooling, contact with fluid (preferably water), radiative cooling, etc. Preferably, the means for cooling comprises bringing the first film or the second film into contact with a cooling roller. Preferably, the cooling roller has a Shore A hardness of from 40 to 100. Preferably, the cooling roller also has a release coating thereon, as well as a composition which increases the rate of heat transfer through the release coating on the cooling roller.

In the process of the present invention, preferably both the first film and the second film are provided from first and second rolls of film (i.e., rollstocks), respectively. Alternatively, a double-wide flat film (or a double-wide seamless film tubing) on a single roll can be unwound and slit to provide both the first film and the second film. A flat film can be centerfolded, with one side (i.e., "leaf") being the first film, and the other side being the second film, with the first and second films being connected by the centerfold line before being brought into contact with one another. The double-wide seamless film tubing, prepared by extrusion from an annular die, can likewise be slit open along one edge, in order to provide the equivalent of the centerfolded film described above.

Alternatively, either the first film or the second film can be supplied directly from an extrusion process, with the other film being provided from a rollstock. It is preferred that any film(s) provided from rollstock are stress relaxed by a means for stress relaxation, i.e., a means for annealing. Preferably, the means for stress relaxation is performed immediately upon unwinding the film from the rollstock but before contacting the first and second films together. Preferably, the means for stress relaxation heats the part of all of the film to a temperature above a Vicat softening point of but below a glass transition temperature, so that the film is de-stressed. Stress relief provides the film(s) with enhanced flatness so that the film lies smoothly on the raised surface roller, and so that the films are flat relative to one another in order to improve the uniformity of the desired film-to-film contact during downstream processing.

In one embodiment, the contacting of the first film with the second film is carried out before heating either film, i.e., while forwarding the first film and second film together at the same speed, upstream of the raised surface roller. In another embodiment, a selected portion(s) of the first film is heated before the first and second films come into contact with one another. This can be done by having the first film contact the raised surface roller before the first film contacts the second film, so that film-to-film contact and heat sealing are nearly simultaneous. During heat sealing, preferably heat and pressure are applied simultaneously.

Heating sealing is preferably performed by passing the first and second films together through a nip between a first roll (herein referred to as the "raised surface roller") and a second roll (herein referred to a the "contact roller"), with at least one of the rolls having a patterned raised surface and at least one of the pair of rolls being heated. The raised surface roller has the patterned raised surface. Preferably the raised surface roller is heated and the contact roller is not heated. Alternatively, if both the first roll as well as the second roll can be provided with a raised surface (and alternatively, both can also be heated), in which case the raised surfaces of the first and second rolls are operatively aligned, so that together they can effect a heat-sealing of the selected portion of the first film to the selected portion of the second film. Preferably, each roll with a raised surface has a continuous raised surface so that the nip between the first and second rolls is maintained throughout rotation of the first and second rolls, without further means to maintain the nip. A continuous nip ensures continuous forwarding of the first and second films.. If a roll does not have a raised surface, preferably such roll has a smooth continuous surface to ensure that the nip is maintained throughout rotation of the roll. Alternatively, means can be provided to maintain the nip between irregular rolls and between rolls having discontinuous raised surfaces, such as overlapping raised surfaces, and/or a resilient surface on one or more of the rolls, and/or a roll on a moveable axis with force continuously urging the rolls into contact with one another despite irregularities. Preferably, the first and second films are heat sealed to one another in a repeating pattern which results in one or more sealed areas in combination with one or more unsealed areas.

### BRIEF DESCRIPTION OF THE DRAWINGS

The numerous features and advantages of the present invention are better understood by those skilled in the art by reference to the accompanying detailed description and the following drawings, in which:
FIG. 1 is a schematic of a preferred process for making the inflatable article.
FIG. 2 is a schematic of a first alternative process for making a laminated article.
FIG. 3 is a more detailed diagrammatic view of a section of an inflatable article.

### DETAILED DESCRIPTION OF THE INVENTION

In the process of the present invention, an inflatable article is made from either two discrete films, a tubular film which is slit, or a folded flat film. The films are sealed to one another in selected seal regions, forming a pattern of sealed and unsealed areas, the latter of which define chambers, inflation channels, connecting passageways, an inflation skirt, and optionally one or more inflation manifolds that can be inflated, thereby ultimately (i.e., upon inflation and sealing to entrap the inflation gas or fluid) providing cushioning pockets or bubbles within the laminate. The invention is used to fabricate laminate materials from polymeric resins in a one stage process that eliminates disadvantages associated with multiple stage processes.

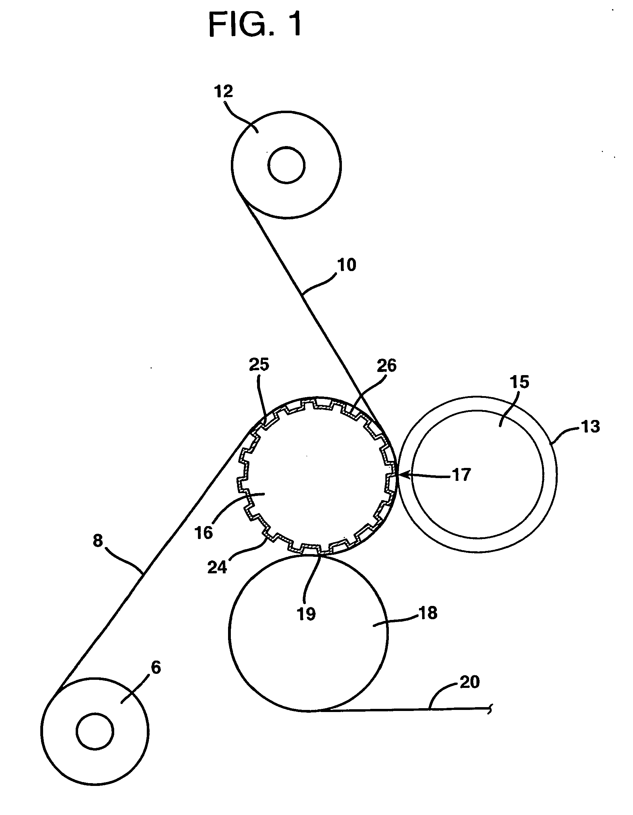

In the FIG. 1 process schematic, roll 6 of first film 8 is unwound with first film 8 being directed onto and passing partially around the surface of hot raised surface roller 16, before first film 8 contacts second film 10 which is provided from roll 12. First film 8 is heated by hot raised surface roller 16. When first film 8 and second film 10 pass through nip 17 between raised surface roller 16 and contact roller 15, the heat and pressure to which films 8 and 10 are subjected forms a heat seal between first film 8 and second film 10. Thereafter, films 8 and 10 pass further around raised surface roller 16, and through nip 19 between raised surface roller 16 and cooling roller 18. Thereafter, films 8 and 10 make a partial wrap around cooling roller 18, and emerge therefrom as inflatable laminate web 20.

The raised surface of raised surface roller 16 heats that portion of film 8 which contacts the raised surface of roller 16. Heat is transferred from the raised surface of roller 16, through a heated portion of film 8, eventually heating through to a corresponding portion of film 10 to be heat sealed to film 8. Upon passing about 180 degrees around raised surface roller 16, heated films 8 and 10 together pass through second nip 19, which subjects heated films 8 and 10 to about the same pressure as is exerted in first nip 17, resulting in a patterned heat seal between films 8 and 10. Preferably, nips 17 and 19 each subject films 8 and 10 to a pressure of from 2 to 10 pounds per linear inch, more preferably 2 to 6 pounds per linear inch, more preferably about 4 pounds per linear inch.

Raised surface roller 16 comprises raised surfaces 24, recesses 25, and recessed surfaces 26. Raised surface roller 16 is a heat transfer roller. Raised surface roller 16 preferably has a diameter of 12 inches and is preferably heated by circulating hot oil therethrough so that the surface is maintained at a temperature of from 146°C to 180°C (280°F to 350°F), with the edges of its raised surfaces being rounded over to a radius of 0.4 mm (1/64 inch).

In order to carry out the process at relatively high speed, e.g., a speed of at least 35 m (120 feet) per minute, preferably from 45 to 90 m (150 to 300 feet) per minute, but up to as high as 150 m (500 feet) per minute, it has been found to be important to provide the manufacturing apparatus with several features. First, the raised surface roller should be provided with a release coating or layer. The release coating reduces adherence with film 12 while film 12 contacts raised surface roller 16, and particularly when film 12 releases from roller 16, At least a portion of release coating 28 is infused with one or more polymers. The polymer infused can be any conventional polymer used for reducing adherence to polymer films, for example, Teflon^{®} polytetrafluoroethylene. Raised surface roller 16 can be infused by any conventional infusion process. As used herein, the phrase "release coating" is inclusive of all release coatings and layers, including polyinfused coatings, applied coatings such as brushed and sprayed coatings which cure on the roll, and even a release tape adhered to the roll.

A preferred release coating composition comprises Teflon^{®} polytetrafluoroethylene. More particularly, raised surface roller 16 has an infused Teflon^{®} polytetrafluoroethylene coating thereon (i.e., a polyinfused coating, which was a SF-2R coating {less preferably, an SFX coating}) prepared by General Magnaplate, at 1331 US1, Linden, New Jersey, 07036, with the raised surface(s) being above the background by a distance of ¼ inch (0.64 cm).

Preferably, the raised surface of roller 16 is also textured to reduce adherence to polymer films. More particularly, the raised surface of raised surface roller 16 is provided with a surface roughness of from 50 to 500 root mean square (i.e., "rms"), preferably 100 to-300 rms, more preferably about 250 rms. This degree of roughness improves the release qualities of raised surface roller 16, enabling faster process speeds and a high quality product which is undamaged by licking back on roll 16.

Films 8 and 10 preferably contact raised surface roller 16 for a distance of about 180 degrees. The edges of the raised surfaces should be rounded off to a radius large enough that the film readily releases without snagging on an edge due to its "sharpness" relative to the softened film, and to prevent damage to the hot films during passage through a nip between the raised surface roller and the contact roller and especially when passing through a nip between the raised surface roller and the cooling roller. Preferably, the radius of curvature on the edges of the raised surface is from 0.1mm to 10mm (1/256 inch to 3/8 inch), more preferably from 0.2 mm to 1.6 mm (1/128 inch to 1/16 inch), more preferably from 0.25mm to 0.8mm (1/100 inch to 1/32 inch) and more preferably about 0.4mm (1/64 inch), i.e., about 0.04 cm.

Contact roller 15 applies pressure to films 8 and 10 as they pass through nip 17. The present invention is not limited to contact roller 15, but rather encompasses other contact surfaces formed on other apparatus, such as a planer surfaces, curved surfaces, or portion of a clamp, as will be understood by persons familiar with film processing technology in view of the present disclosure. Preferably, contact roller 15 has an elastic outer coating 13 comprising rubber. Preferably, elastic outer coating 13 provides roller 15 has a Shore A. hardness of from 50 to 110, more preferably from 55 to 85, more preferably from 60 to 80, more preferably about 70. Alternatively, contact roller 15 has a release coating thereon, which preferably comprises polytetrafluoroethylene.

Contact roller 15 applies pressure to films 8 and 10 as they pass through nip 17. The present invention is not limited to contact roller 15, but rather encompasses other contact surfaces formed on other apparatus, such as a planer surfaces, curved surfaces, or portion of a clamp, as will be understood by persons familiar with film processing technology in view of the present disclosure.

It is also important to provide the cooling roller downstream of and in nip relationship with the raised surface roller, with a release coating or layer, as described above. Preferably, the cooling roller is maintained at a temperature below the fusing temperatures of films, using conventional cooling techniques. The cooling roller solidifies the heated portions of the first and second films. The present invention is not limited to one cooling roller 18, but rather further encompasses the use of two or more cooling rollers in the process, i.e., downstream of the heated raised surface roller 16. Moreover, any suitable means for cooling could be used in place of one or more cooling rollers, such as cooled planer surfaces, cooled curved surfaces, cooled clamping surfaces of any shape, cool fluids and gases, etc., as will be understood by persons of skill in the art of film manufacture and processing.

The cooling roller lowers the temperature of the selected heated portions of the laminate, in order to cool the heat seals so that they become strong enough to undergo further processing without being damaged or weakened. Moreover, the means for cooling is preferably immediately downstream of the heating means (i.e., the raised surface roller), in order to reduce heat seepage from the still-hot seals to unheated portions of film, to prevent unheated portions of laminated article from becoming hot enough to fuse the films in an area intended to serve as an inflation chamber or inflation passageway.

Preferably, films 8 and 10 make a partial wrap of about 90 degrees around heat transfer roller 18 (i.e., a cooling roller), which has a diameter of 12 inches and which has cooling water passing therethrough, the cooling water having a temperature of from 38°C to 65°C (100°F to 150°F). Preferably, cooling roller 18 has a 6.4mm (¼ inch) thick (about 0.64 cm thick) release and heat-transfer coating thereon (not illustrated). The coating is made from a composition designated as "Thermosil® 70 Brown", which was provided and applied to a metal roller by United Silicone of Lancaster, N.Y. The coating contained silicone rubber to provide cooling roller 74 with a Shore A hardness of from 50 to 110, preferably 55-85, more preferably 60-80, and still more preferably about 70. The Thermosil® 70 Brown composition also contained one or more fillers to increase the heat conductivity to improve the ability of cooling roller 18 to cool the still hot films, now sealed together to result in inflatable article 20, which was thereafter rolled up to form a roll for shipment and subsequent inflation and sealing, to result in a cushioning article.

Although cooling step 6 can be passive (e.g., in that the heat seals are simply allowed to cool by giving off heat to the ambient environment), it is preferably active in order to quickly cool the heat seals immediately after formation, so that the heat seal is not damaged or weakened by continued processing. Preferred cooling means are as described above.

The process can be further assisted by an apparatus capable of adjusting the temperature of films to maximize film fabrication speeds. Optionally, one or more transfer rollers (not illustrated) can be used between roll 6 and raised surface roller 16, as well as between roll 12 and raised surface roller 16. The transfer rolls can be at ambient temperature or optionally can be heated or cooled in order to preheat or cool the film(s) before contact with raised surface roll 16 or one another. Preheating of film from a rollstock can assist in fast heat sealing. Cooling of a films provided via extrusion (vs. rollstock) can assist in downstream processing by quickly bringing the film down to (or below) a temperature suitable for passage through nip 17 and formation of the heat seal.

The present invention is inclusive of the heat-sealing of two monolayer films to one another, heat sealing a multilayer film to a monolayer film, and heat sealing two multilayer films to one another.

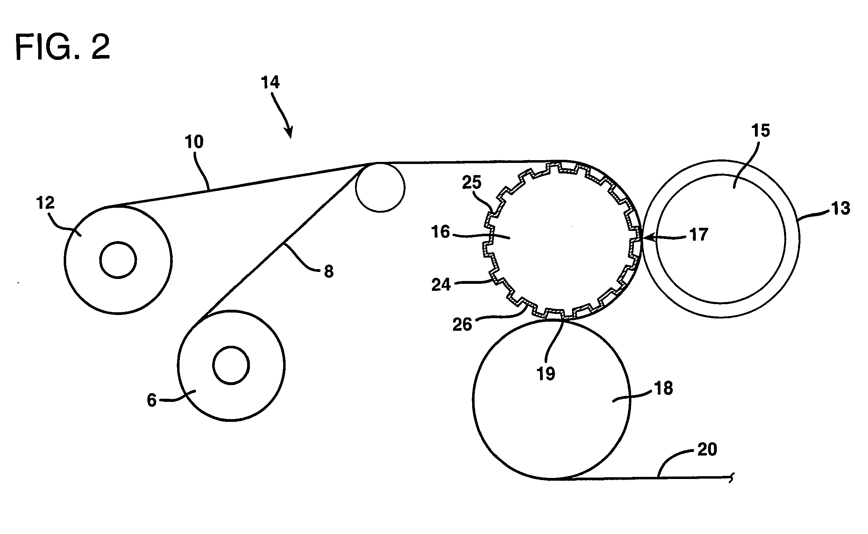

FIG. 2 is a diagrammatic view of another alternative process 14 for making an inflatable article. In FIG. 2, first and second films 8 and 10 are in mutual contact when first film 8 contacts raised surface roller 16 before films 8 and 10 enter nip 17. First film 8 and second film 10 are heated by raised surface roller 16 as they are advanced through nip 17 between raised surface roller 16 and contact roller 15.

The methods and apparatus of the present invention can be operated at a higher output than conventional processes, including for example film outputs of more than 250 feet in length of film per minute. In addition, the methods produce larger width films than conventional processes, including for example, widths greater than 36 inches. The increase in film width and in rate of film produced thereby permits an increase in the surface area of laminated material produced more efficiently and at lower cost compared to conventional methods.

The methods of the present invention have an advantage over conventional methods of making protective laminates and bubble film because the present methods do not require thermoforming of the structure of the laminate material during the heat sealing process by vacuum stretching the films. However, the present invention is not limited to methods that do not distort and/or deform the films, but rather encompasses conventional vacuum stretching techniques as will be understood by persons familiar with film processing technology in view of the present disclosure.

Raised surfaces 24 and recessed surfaces 26 form a patterned heat seal 27 in laminate material 20 as explained more fully above with reference to FIG. 1 and FIG. 2. Raised surfaces 24 extend away (i.e., outward) from recessed surfaces 26 thereby forming a pattern for the heat seal(s) to be made to form the inflatable article. Recess surfaces 26 are not in contact with contact surface 16 while raised surface roller 16 is in contact with roller 15.

In an alternative embodiment of the present invention (not illustrated), contact roller 15 has raised surfaces that correspond to raised surfaces 24. Contact roller 15 has recesses and recessed surfaces that correspond with recesses 25 and recessed surfaces 26.

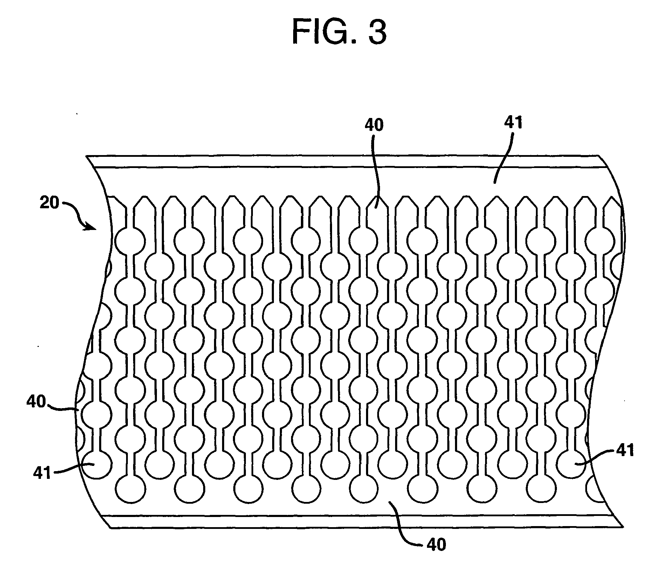

The term "nip" as used herein refers to a contact area between two rollers. First film 8 and second film 10 are in contact as they pass though nip 17. As first and second films 8 and 12 pass through nip 17, heat and/or pressure are applied to selected portions of first and second films 8 and 10, fusing the films together to form patterned heat seals schematically illustrated as 27 in FIG. 3.

First and second films 8 and 10 can be monolayer films, or multilayer films. If multilayer, they can be coextruded through annular or slot dies, extrusion coated, and can be produced by cast or blown film processes. In one embodiment, first and second films 8 and 10are toughened by crosslinking via chemical cross-linking or irradiation techniques known to those of skill in the art.

The process and apparatus illustrated in FIG. 1 can also be supplemented with additional optional components and steps. More particularly, one or both of films 8 and 10 can be preheated to a temperature below their fusing temperature, so that less heat need be added by raised surface roller 16. In this manner, the process can be operated at higher speed, and/or the heat seal may be made stronger or of otherwise higher quality. Preheating can be carried out by, for example, providing additional heated rolls for each of films 8 and 10, in advance of heated raised surface roller 16. Optionally, additional nip means (i.e., rollers or otherwise) can be provided against raised surface roller 70, to provide additional pressure points for the formation of strong heat seals at high manufacturing speeds.

FIG. 3 is a schematic view of laminate material 20. In FIG. 3, laminate material 20 comprises first film 8 heat sealed to second film 10 in a particular heat seal pattern. Laminate 20 has heat sealed portion 40, as well as unsealed portion 41. Heat sealed portion 40 is continuous along the machine direction of inflatable laminate article 20, with sealed portion 40 corresponding to a preferred raised surface pattern for raised surface roller 16 of FIG. 1. Unsealed portion 41 is also continuous along the machine direction of article 20, with unsealed portion 41 corresponding to a preferred recessed surface pattern (i.e., background pattern) of raised surface roller 16 and 70. Unsealed portion 41 is arranged to form a pattern that includes distinct air chambers, connecting channels, as well as leaving a skirt (i.e., film flaps) for use in inflating the inflatable article. Optionally, the unsealed portion could further include a passageway in the machine direction which serves as a manifold, i.e, connecting each of the passageways along an edge of the article. However, a skirt is preferred. Preferably, the inflatable chambers have an uninflated diameter of about 45 mm (1.75 inches), and the passageways connecting the inflatable chambers have an uninflated width of 10 mm (3/8 inch), and the seals are made so that the edges of the inflatable chambers and passageways are free of inflection points which can produce unwanted stresses during inflation and use of the product.

The films referred to herein preferably comprise a polyolefin, such as for example a low density polyethylene, a homogeneous ethylene/alpha-olefin copolymer (preferably a metallocene-catalyzed ethylene/alpha-olefin copolymer), a medium density polyethylene, a high density polyethylene, a polyethylene terapthalate, polypropylene, nylon, polyvinylidene chloride (especially methyl acrylate and vinyl chloride copolymers of vinylidene chloride), polyvinyl alcohol, polyamide, or combinations thereof.

Preferably, laminate materials 20 are as thin as possible, in order to minimize the amount of resin necessary to fabricate laminate materials 20, but at the same time are thick enough to provide adequate durability. Preferably, each of first and second films 8 and 10 have a gauge thickness of from about 0.003 to about 0.5 mm (about 0.1 to about 20 mils). More preferably, each film layer has a total gauge thickness from about 0.013 to about 0.25 mm (about 0.5 to about 10 mils), more preferably from about 0.02 to abut 0.1 mm (about 0.8 to about 4 mils), and even more preferably from about 0.025 to about 0.076 (about 1.0 to about 3 mils).

If desired or necessary, various additives are also included with the films. For example, additives comprise pigments, colorants, fillers, antioxidants, flame retardants, anti-bacterial agents, anti-static agents, stabilizers, fragrances, odor masking agents, antiblocking agents, slip agents, and the like. Thus, the present invention encompasses employing suitable film constituents.

Preferably first and second films 8 and 10 are hot blown films having an A/B/C/B/A, structure which has a total thickness of 0.04 mm (1.5 mils). The A layers together make up 86 percent of the total thickness, each of the B layers making up 2% of the total thickness, and the C layer making up 10% of the total thickness. The C layer is an O₂-barrier layer of 100% Caplon^{®} B 100WP polyamide 6 having a viscosity of Fav = 100, obtained from Allied Chemical. Each of the B layers are tie layers made of 100% Plexar^{®} PX165 anhydride modified ethylene copolymer from Qunatum Chemical. Each of the A layers are a blend of 45% by weight HCX002 linear low density polyethylene having a density of 0.941 g/cc and a melt index of 4, obtained from Mobil, 45% by weight LF10218 low density polyethylene having a density of 0.918 g/cc and a melt index of 2, obtained from Nova, and 10% by weight SLX9103 metallocene-catalyzed ethylene/alpha-olefin copolymer, obtained from Exxon.

The laminates formed according to the present invention will resist popping when pressure is applied to a localized area because channels of air between chambers provide a cushioning effect. The laminates also show excellent creep resistance and cushioning properties due to inter-passage of air between bubbles.

The various terms and phrases utilized throughout this document are to be given their ordinary meaning as understood by those of skill in the art, except and to the extent that any term or phrase used herein is referred to and/or elaborated upon in U.S. Patent No. 5,837,335, to Babrowicz, entitled High Shrink Multilayer Film which Maintains Optics upon Shrinking, issued Nov. 17, 1998, which supplements the ordinary meaning of all terms, phrases, and other descriptions set forth herein.

## Claims

1. A process for making an inflatable laminated article, comprising the steps of.
(A) contacting a first film (8) with second film (10),
(B) heating selected portions (40) of at least one the first and second films to a temperature above a fusion temperature of the first and second films, so that the first and second films are heat sealed to one another to produce a laminated article having heat seal pattern which provides a plurality of inflatable chambers between the first film and the second film;
wherein the first and second films are forwarded at a speed of at least 35 m per minute (120 feet per minute) while coming into contact with one another, and wherein the heating is carried out by contacting the first film with a heated raised surface roller (16) having a release coating thereon.

2. The process according to Claim 1, wherein the raised surface roller has a surface roughness of from 50 to 500 rms.

3. The process according to Claim 1, wherein the first and second films are heat sealed to one another under a combination of heat and pressure.

4. The process according to Claim 3, wherein the pressure is produced by means for forming a nip area.

5. The process according to Claim 4, wherein the first film is brought into contact with the raised surface roller and heated to the fusion temperature before passing through the nip area.

6. The process according to Claim 4, wherein the means for forming a nip area is a contact roller (15) in a nip relationship with the raised surface roller.

7. The process according to Claim 6, wherein the contact roller bas an elastic outer coating comprising rubber.

8. The process according to Claim 1, wherein the release coating on the raised surface roller comprises a polymer.

9. The process according to Claim 8, wherein the release coating is a polyinfused coating.

10. The process according to Claim 9, wherein the polyinfused coating comprises polytetrafluoroethylene.

11. The process according to Claim 1, wherein the raised surface roller has edges of raised surfaces having a radius of curvature of from 0.1 mm to 10 mm (1/256 inch to 3/8 inch).

12. The process according to Claim 1, further comprising cooling the first and second films after heating the selected portions of the films, the cooling being carried out by a means for cooling.

13. The process according to Claim 12, wherein the means for cooling comprises bringing the first film or the second film into contact with a cooling roller (18).

14. The process according to Claim 12, wherein the cooling roller has a Shore A hardness of from 40 to 100.

15. The process according to Claim 13, wherein the cooling roller has a release coating thereon.

16. The process according to Claim 15, wherein the release coating on the cooling roller comprises polytetrafluoroethylene.

17. The process according to Claim 1, wherein at least one member selected from the first film and the second film is provided from a rollstock (6, 12).

18. The process according to Claim 17, wherein any film provided from a rollstock is stress releaxed by being heated to a temperature above a Vicat softening point but below a glass transition temperature before being brought into contact with another film.

19. The process according to Claim 17, wherein the first film is provided from a first rollstock and the second film is provided from a second rollstock.

20. The process of any one of the preceding Claims, wherein said first film is a flat film.

21. The process of any one of the preceding claims, wherein said second film is a flat film.

22. The process of any one of the preceding claims further comprising providing said first film and/or said second film by unwinding the film from a respective first and/or second rollstock (6, 12).

## Patentansprüche

1. Verfahren zur Herstellung eines aufblasbaren laminierten Gegenstandes, bei dem
(A) eine erste Folie (8) mit einer zweiten Folie (10) kontaktiert wird,
(B) ausgewählte Abschnitte (40) von mindestens einer der ersten und zweiten Folie auf eine Temperatur oberhalb einer Verschmelzungstemperatur der ersten und zweiten Folie erwärmt werden, so dass die erste und zweite Folie unter Bildung eines laminierten Gegenstandes miteinander heißgesiegelt werden, der ein Heißsiegelmuster aufweist, das eine Vielzahl aufblasbarer Kammern zwischen der ersten Folie und der zweiten Folie ergibt;
wobei die erste und zweite Folie mit einer Geschwindigkeit von mindestens 35 Meter pro Minute (120 Fuß pro Minute) transportiert werden, während sie in Kontakt miteinander kommen, und wobei die Erwärmung durchgeführt wird, indem die erste Folie mit einer geheizten Walze (16) mit erhöhten Oberflächen kontaktiert wird, die eine Trennbeschichtung aufweist.

2. Verfahren nach Anspruch 1, bei dem die Walze mit erhöhten Oberflächen eine Oberflächenrauheit von 50 bis 500 rms aufweist.

3. Verfahren nach Anspruch 1, bei dem die erste und zweite Folie durch eine Kombination von Hitze und Druck miteinander heißgesiegelt werden.

4. Verfahren nach Anspruch 3, bei dem der Druck durch ein Mittel zur Bildung eines Quetschspaltbereichs erzeugt wird.

5. Verfahren nach Anspruch 4, bei dem die erste Folie vor dem Durchlaufen des Quetschspaltbereichs mit der Walze mit erhöhten Oberflächen in Kontakt gebracht und auf die Verschmelzungstemperatur erwärmt wird.

6. Verfahren nach Anspruch 4, bei dem das Mittel zur Bildung eines Quetschspaltbereichs eine Kontaktwalze (15) in einer Quetschspaltanordnung mit der Walze mit erhöhten Oberflächen ist.

7. Verfahren nach Anspruch 6, bei dem die Kontaktwalze eine Kautschuk umfassende elastische äußere Beschichtung aufweist.

8. Verfahren nach Anspruch 1, bei dem die Trennbeschichtung auf der Walze mit erhöhten Oberflächen ein Polymer umfasst.

9. Verfahren nach Anspruch 8, bei dem die Trennbeschichtung eine Beschichtung mit mehreren Einbettungen ist.

10. Verfahren nach Anspruch 9, bei dem die Beschichtung mit mehreren Einbettungen Polyetrafluorethylen umfasst.

11. Verfahren nach Anspruch 1, bei dem die Walze mit erhöhten Oberflächen Kanten von erhöhten Oberflächen mit einem Krümmungsradius von 0,1 mm bis 10 mm (1/256 Zoll bis 3/8 Zoll) aufweist.

12. Verfahren nach Anspruch 1, bei dem ferner die erste und zweite Folie nach dem Erwärmen der ausgewählten Abschnitte der Folien gekühlt werden, wobei das Kühlen durch Mittel zum Kühlen erfolgt.

13. Verfahren nach Anspruch 12, bei dem die Mittel zum Kühlen umfassen, die erste Folie oder die zweite Folie in Kontakt mit einer Kühlwalze (18) zu bringen.

14. Verfahren nach Anspruch 12, bei dem die Kühlwalze eine Shore A-Härte von 40 bis 100 aufweist.

15. Verfahren nach Anspruch 13, bei dem die Kühlwalze eine Trennbeschichtung aufweist.

16. Verfahren nach Anspruch 15, bei dem die Trennbeschichtung auf der Kühlwalze Polytetrafluorethylen umfasst.

17. Verfahren nach Anspruch 1, bei dem mindestens ein Mitglied ausgewählt aus der ersten Folie und der zweiten Folie von einer Vorratsrolle (6, 12) geliefert wird.

18. Verfahren nach Anspruch 17, bei dem jegliche von einer Vorratsrolle gelieferte Folie spannungsrelaxiert wird, indem sie auf eine Temperatur oberhalb eines Vikat-Erweichungspunktes aber unterhalb einer Glasübergangstemperatur erwärmt wird, bevor sie in Kontakt mit einer anderen Folie gebracht wird.

19. Verfahren nach Anspruch 17, bei dem die erste Folie von einer ersten Vorratsrolle und die zweite Folie von einer zweiten Vorratsrolle geliefert wird.

20. Verfahren nach einem der vorhergehenden Ansprüche, bei dem die erste Folie eine Flachfolie ist.

21. Verfahren nach einem der vorhergehenden Ansprüche, bei dem die zweite Folie eine Flachfolie ist.

22. Verfahren nach einem der vorhergehenden Ansprüche, bei dem ferner die erste Folie und/oder die zweite Folie durch Abrollen der Folie von einer jeweiligen ersten und/oder zweiten Vorratsrolle (6, 12) geliefert wird.

## Revendications

1. Procédé de fabrication d'un article stratifié gonflable, comprenant les étapes consistant à :
(A) mettre en contact un premier film (8) avec un deuxième film (10) ;
(B) chauffer des parties sélectionnées (40) d'au moins l'un des premier et deuxième films, à une température située au-dessus d'une température de fusion des premier et deuxième films, de sorte que les premier et deuxième films sont thermosoudés entre eux pour produire un article stratifié ayant un dessin de thermosoudage qui fournit une pluralité de chambres gonflables entre le premier film et le deuxième film ;
dans lequel on fait avancer les premier et deuxième films à une vitesse d'au moins 35 m par minute (120 pieds par minute) tout en les mettant en contact l'un avec l'autre, et dans lequel le chauffage est effectué en mettant en contact le premier film avec un rouleau à surface en relief chauffée (16) portant un revêtement antiadhésif.

2. Procédé selon la revendication 1, dans lequel le rouleau à surface en relief a une rugosité de surface RMS de 50 à 500.

3. Procédé selon la revendication 1, dans lequel les premier et deuxième films sont thermosoudés entre eux sous une combinaison de chaleur et de pression.

4. Procédé selon la revendication 3, dans lequel la pression est produite par un moyen servant à former une zone de ligne de contact.

5. Procédé selon la revendication 4, dans lequel le premier film est mis en contact avec le rouleau à surface en relief et chauffé à la température de fusion avant de passer par la zone de ligne de contact.

6. Procédé selon la revendication 4, dans lequel le moyen pour former une zone de ligne de contact est un rouleau de contact (15) en relation de ligne de contact avec le rouleau à surface en relief.

7. Procédé selon la revendication 6, dans lequel le rouleau de contact a un revêtement extérieur élastique comprenant du caoutchouc.

8. Procédé selon la revendication 1, dans lequel le revêtement antiadhésif du rouleau à surface en relief comprend un polymère.

9. Procédé selon la revendication 8, dans lequel le revêtement antiadhésif est un revêtement à polymère incorporé à l'état fondu.

10. Procédé selon la revendication 9, dans lequel le revêtement à polymère incorporé à l'état fondu comprend du polytétrafluoroéthylène.

11. Procédé selon la revendication 1, dans lequel le rouleau à surface en relief a des bords de surfaces en relief ayant un rayon de courbure de 0,1 mm à 10 mm (1/256^{e} de pouce à 3/8^{e} de pouce).

12. Procédé selon la revendication 1, comprenant en outre le fait de refroidir les premier et deuxième films après avoir chauffé les parties sélectionnées des films, le refroidissement étant effectué à l'aide d'un moyen de refroidissement.

13. Procédé selon la revendication 12, dans lequel le moyen de refroidissement comprend le fait d'amener le premier film ou le deuxième film en contact avec un rouleau de refroidissement (18).

14. Procédé selon la revendication 12, dans lequel le rouleau de refroidissement a une dureté de 40 à 100 Shore A.

15. Procédé selon la revendication 13, dans lequel le rouleau de refroidissement porte un revêtement antiadhésif.

16. Procédé selon la revendication 15, dans lequel le revêtement antiadhésif présent sur le rouleau de refroidissement comprend du polytétrafluoroéthylène.

17. Procédé selon la revendication 1, dans lequel au moins un élément choisi parmi le premier film et le deuxième film est fourni par une bobine (6, 12).

18. Procédé selon la revendication 17, dans lequel tout film fourni par une bobine est détendu en étant chauffé à une température supérieure à une température de ramollissement Vicat mais inférieure à une température de transition vitreuse avant d'être mis en contact avec un autre film.

19. Procédé selon la revendication 17, dans lequel le premier film est fourni par une première bobine et le deuxième film est fourni par une deuxième bobine.

20. Procédé selon l'une quelconque des revendications précédentes, dans lequel ledit premier film est un film plat.

21. Procédé selon l'une quelconque des revendications précédentes, dans lequel ledit deuxième film est un film plat.

22. Procédé selon l'une quelconque des revendications précédentes, comprenant en outre le fait de fournir ledit premier film et/ou ledit deuxième film en déroulant le film d'une première et/ou deuxième bobine respective (6, 12).
